# EUROPEAN PATENT APPLICATION

(11) **EP 0 998 070 A2**
(43) Date of publication of application: **03.05.2000**
(21) Application number: 99440287.3
(22) Date of filing: 22.10.1999
(51) Int. Cl.: H04L 1/00

(54) **Transmission method using a variable-length code**

(30) Priority: 27.10.1998 IT MI982295
(71) Applicant: ALCATEL, 75008 Paris (FR)
(72) Inventor: Cancellieri, Giovanni, 40068 San Lazzaro di Savena, Bologna (IT); Marchesani, Rossano, 66100 Chieti (IT)
(74) Representative: Knecht, Ulrich Karl, Dipl.-Ing.

(57) **Abstract**

A method of encoding information, in particular for transmitting over error-affected transmission channels, using a variable-length code. According to the invention, a code is described for correcting errors introduced into a transmission channel of the Modified Length G Diagram (MLGD) type, in which by finely varying the data bit number to the redundant bit number ratio, a finely variable redundancy is introduced ranging from r/n (characteristic of a BCH code) to 1 (characteristic of a convolutional code). The deriving code has intermediate characteristics proportional to the introduced redundance.

## Description

The present invention relates to a method of encoding information, in particular for transmitting over error-affected transmission channels, in which redundant bits are added to data bits to be transmitted by applying a redundancy generating polynomial function of a given order.

A long felt problem in the communication field, especially radio communication, is protecting information against possible transmission errors introduced in the transmission channel.

In order to protect the information to be transmitted against channel errors, several information encoding techniques have been developed, which techniques modify it by adding further information correlated with the information itself. The presence of this redundant additional information allows the reconstruction of the transmitted information, even in the presence of a number of errors introduced by the transmission channel. Such techniques consist, therefore, in the use of error-correcting codes and are extensively used in transmission of information.

In particular, BCH codes and convolutional codes are extensively used.

Such codes are known and described e.g. in the book "Error Control Coding" by S. Lin and D. J. Costello, Englewood Cliffs, N J, Prentice-Hall, 1983.

The BCH code is a block systematic code, since the data bits to be transmitted are slotted into blocks of length k, r redundant bits are added, n=r+k bits in all are transmitted for each original block of k bits. The correlation between information and redundancy occurs exclusively inside each block by utilizing, in a way well known to a person skilled in the art, a redundancy generating polynomial function. This type of code is very good when it is necessary to protect data blocks transmitted one by one over channels affected by a reduced percentage of errors. Typical values are up to some hundreds of binary data in the presence of 3-4 errors at most.

The convolutional code is a recursive convolutional systematic code: the data bits to be transmitted are spaced out one by one with redundant bits, also in this circumstance by utilizing a redundancy generating polynomial function. It is also possible to use more polynomial functions to generate more redundant bits for each information bit. The code is defined with code ratio of 1/2, 1/3, 1/4 if 1, 2 or 3 different polynomials are respectively used for generating the redundancy. This type of code creates a continuous correlation between transmitted data (not only confined in separated blocks as for the BCH code) by introducing at least one redundancy every information datum. It is a very effective code, capable of correcting a very high number of errors, used in the transmission of long information flows over channels affected by high error rates, close to 50%. The penalty to be paid is the high percentage of redundant data.

The aforesaid codes, however, can be hardly utilized in case of transmission of long information flows over channels affected by an error rate whose value is between those examined previously or when the characteristics of the radio channel are time varying.

Then, in these circumstances, the known solutions, generally used, are the followings.

In a first solution, the continuous flow of data bits is divided into blocks of length k , these being protected with a BCH code and a continuous flow composed of individual consecutive BCH blocks is transmitted. In this manner, the protection of the information is good enough, especially with low error rates, but not so high as if a sole block having the same redundancy level could be transmitted.

A second solution provides for the use of a convolutional code, which is punctured so as to not weight down the transmission with an unnecessary redundancy level. The puncturing operation consists in generating, as described above, all the redundant bits but in transmitting only one bit every two, or every three, every four and so on, according to the protection level which is desired to obtain.

In these circumstances the code ratio (defined above) is 2/3, 3/4 or 4/5, respectively. This solution works well only if the number of bits discarded in the puncturing operation is less than the length of the polynomial which has been used for coding, hence the redundancy generally cannot decrease at will.

The code obtained through this technique is generally more effective than the one obtained through the previous technique. In any case the encoding complexity, in terms of number of operations per data bit, depends only on the polynomial used and does not decrease as the redundancy decreases.

The problem of fully adapting the redundancy level to the radio channel characteristics is still outstanding. None of the previously described techniques allows the coverage of a wide range of channel characteristics with an optimal redundancy level.

Therefore, the object of the present invention is to overcome the aforesaid drawbacks and to provide a code for correcting errors introduced in a transmission channel, of the modified length G-diagram (MLGD) type, in which by finely varying the data bit number to the redundant bit number ratio, a finely variable redundancy ranging from r/n (characteristic of the BCH code) to 1 (characteristic of the convolutional code), is introduced. The deriving code has intermediate characteristics proportional to the introduced redundancy.

To achieve such objects, the present invention provides a method of encoding information, in particular for transmitting over error-affected transmission channels, using a variable-length code, as best described in claims 1 to 3, which are an integral part of the present description.

The present invention further provides an encoder for implementing the method, as described in claim 4, and a related decoder, as described in claims 5 and 6.

The code of the Modified Length G-Diagram (MLGD) type thus obtained has the advantage that any BCH block code or any Recursive Convolutional Code can be realized in a programmable manner.

Moreover, the Modified-Length Code, starting from any BCH code, can generate a code having the same characteristics of a recursive convolutional code, with the same redundancy level and, by varying the redundancy level, any code with characteristics which are intermediate between a block code and a convolutional code, still providing a code which is optimal for the redundancy level used, without the need to modify the starting redundancy generating polynomial function.

The redundancy level and also the redundancy generating polynomial function can be anyway modified during transmission.

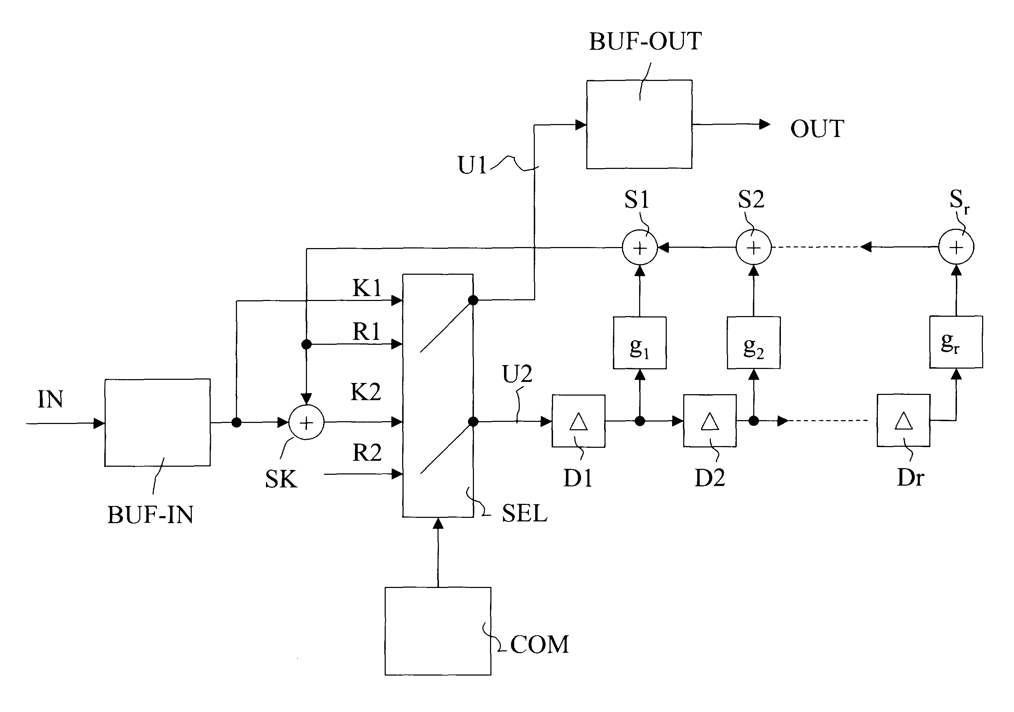

Further objects and advantages of the present invention shall result in being clear from the following detailed description of an embodiment thereof and from the attached drawing provided merely by way of explanation but not of limitation.

In the figure a basic diagram of the modified-length code of the present invention is shown, such a diagram being useful for describing the encoding procedure of the present invention.

In the figure, BUF-IN stands for a conventional input buffer which temporarily stores the input bits IN and supplies them to the encoder at the output K1 with desired rate: in a particular non limiting embodiment, data can be divided into blocks of length k, as in the event of a BCH code.

SEL stands for a two-input, two-way selection function. Applied to the first way, first input, is the output signal K1 of BUF-IN and to the second input, a feedback signal R1. Applied to the second way, first input, is the output signal K2 of a summing device SK, which sums signals K1 and R1, and to the second input, a known state as a feedback signal R2. The known state can be constituted, e.g., by a fixed logical 0, or another prefixed logical condition, according to the generator polynomial chosen, in any case known to a person skilled in the art.

The selection function SEL is controlled by a control block COM which is designed to select the way of the two inputs to be connected to the output, as it will be explained hereinafter. A first output U1 of SEL related to the first way is supplied to a buffer BUF-OUT which provides the output signal OUT. A second output U2 of SEL, related to the second way, is supplied to a delay line formed by series-connected delay elements D1, D2, ..., Dr.

The r outputs of the delay elements D1, D2, ..., Dr are fed to respective multipliers g1, g2, ..., gr, which constitute the coefficients of the rth-order redundancy generating polynomial function. The outputs of multipliers g1, g2, ..., gr are summed with one another in adders S1, S2, ..., Sr for generating the feedback signal R1.

In operation, supposing to start from a BCH code with parameters n, k, r where n=k+r. If the selection function SEL switches over the inputs K1, K2 for k consecutive bits (switch turned to input data IN) and subsequently for r consecutive bits over the inputs R1, R2 (switch turned to the feedback branch of the code), the starting BCH code is exactly implemented.

In the selection function SEL alternatively switches once over inputs K1, K2 and once over inputs R1, R2, a code with redundancy 1 is implemented which has the same error-correcting capacities as a convolutional code which utilizes a redundancy generating polynomial function of order r.

By varying the ratio of the number of bits in which SEL switches over the inputs K1, K2 to the bits in which it switches over the feedback arm R1, R2, a fine variable redundancy ranging from r/n to 1 can be introduced. The deriving code has intermediate characteristics proportional to the introduced redundancy, without the need to modify the starting redundancy generating polynomial function.

Hence the information encoding procedure according to the invention substantially comprises the following steps:
- data bits are divided into blocks of length k;
- the rth-order redundancy generating polynomial function is applied to said bits;
- the total number n of bits ranging from a minimum of n=k+r to a maximum of 2k are generated for each block of length k;
- the output encoded signal OUT is generated by applying an alternation law between data bits and redundancy bits that changes from k data bits followed by r redundancy bits into a continuous alternation between data bits and redundant bits, in such a way that said ratio of the data bit number to the redundant bit number is finely variable from r/n to 1.

Moreover, the input of said redundancy generating polynomial function is constituted by the sum of the data bits and the output of said function, when the data bits are carried on the encoded signal, and by a known logical state, when the redundancy bits generated by the polynomial function are carried on the encoded signal.

Therefore, starting from any BCH code, a code can be generated having the same characteristics as a recursive convolutional code, with the same redundancy level and, by varying the redundancy level, any code having intermediate characteristics between a block code and a convolutional code, still providing a code which is optimal for the used redundancy level. The redundancy level and therefore the generated code can be modified also during transmission without changing the starting redundancy generating polynomial function.

The redundancy generating polynomial function can be modified during transmission as well.

The characteristic parameters of the polynomial function will be sent to the receiver which will be able, in any known manner, to program itself in order to be capable of decoding and reconstructing the transmitted starting data.

The rth-order redundancy generating polynomial function can be any known function used for BCH or convolutional codes. The choice of the known state, as a feedback signal R2, is determined in a known manner by the choice of the redundancy generating polynomial function.

An important feature of the encoding procedure of the invention is related to the choice of the decoder, for which a Viterbi decoder based on the starting redundancy generating polynomial function can be used. The same decoder can be utilized with all the codes generated starting from the same polynomial function.

The decoding complexity, in terms of number of operations, is proportional to the introduced redundancy.

The Viterbi decoder is well known to those skilled in the art: once known the code redundancy generating polynomial function and the variation law of the ratio of the number of bits wherein the switch is switched over the inputs K1, K2 to the bits in which it is on the feedback arm R1, R2, any person skilled in the art is able to realize the Viterbi decoder to be used in reception.

## Claims

1. Method of encoding information, in particular for transmitting over error-affected transmission channels, in which redundant bits are added to the data bits to be transmitted by applying a redundancy generating polynomial function of a given order (r), characterized in that an encoded signal is determined in which the data bit number to the redundant bit number ratio is finely variable, in such a way as to realize a variable redundancy.

2. Method of encoding information according to claim 1, characterized in that it comprises the following steps:
- dividing data bits into blocks of length k;
- applying said rth-order redundancy generating polynomial function to said data bits;
- generating, for each block of length k, a total number n of bits ranging from a minimum of n=k+r to a maximum of 2k; and
- generating said encoded signal by applying an alternation law between data bits and redundant bits that changes from k data bits followed by r redundant bits to a continuous alternation between data bits and redundant bits in such a way that said data bit number to the redundant bit number ratio is finely variable from r/n to 1.

3. Method of encoding information according to claim 2, characterized in that the input of said redundancy generating polynomial function is constituted by the sum of said data bits and the output of said function, when the data bits are carried on said encoded signal, and by a known logical state, when the redundant bits generated by the polynomial function are carried on said encoded signal.

4. Device for encoding information, in particular for transmitting over error affected transmission channels, characterized in that it comprises means for realizing the information encoding procedure as in any of claims 1 to 3.

5. Device for decoding information in particular from error-affected transmission channels, characterized in that it comprises means for decoding said encoded signal, as in any of claims 1 to 3.

6. Device for decoding information as claimed in claim 5, characterized in that said means for decoding said encoded signal comprise a Viterbi decoder based on said redundancy generating polynomial function.
